Europäisches Patentamt

European Patent Office

Office européen des brevets

(11) Veröffentlichungsnummer: **0 181 605 B1**

# (12) EUROPÄISCHE PATENTSCHRIFT

(45) Veröffentlichungstag der Patentschrift: **06.05.92**

(51) Int. Cl.⁵: **B01D  17/032**, A47J 43/28

(21) Anmeldenummer: **85114156.4**

(22) Anmeldetag: **07.11.85**

(54) **Gefäss zur Trennung von Flüssigkeiten.**

(30) Priorität: **15.11.84 DE 8433526 U**

(43) Veröffentlichungstag der Anmeldung:
**21.05.86 Patentblatt  86/21**

(45) Bekanntmachung des Hinweises auf die
Patenterteilung:
**06.05.92 Patentblatt  92/19**

(84) Benannte Vertragsstaaten:
**AT BE CH DE FR GB IT LI LU NL SE**

(56) Entgegenhaltungen:
**DE-C- 546 619**
**FR-A- 2 497 117**

(73) Patentinhaber: **Christmann, Fred**
**Itzenbüttler Mühlenweg 71**
**W-2106 Bendestorf(DE)**

(72) Erfinder: **Christmann, Fred**
**Itzenbüttler Mühlenweg 71**
**W-2106 Bendestorf(DE)**

(74) Vertreter: **Heldt, Gert, Dr. Dipl.-Ing.**
**Neuer Wall 59 III**
**W-2000 Hamburg 36(DE)**

Rank Xerox (UK) Business Services
(−/2.18/2.0)

**Beschreibung**

Die Erfindung betrifft ein Gefäß zur Trennung von Flüssigkeiten, die sich weder mischen noch ineinander lösen lassen und unterschiedliche, spezifische Gewichte aufweisen, mit einer vom Boden begrenzten Wandung, die von einem Ausgießstutzen im Bereich eines Querschnitts durchdrungen ist, in dem eine Ausgießöffnung angeordnet ist, die kleiner als der Querschnitt ist, der in seinem vom Boden abgewandten oberen Bereich durch einen Steg verschlossen ist, der sich quer zu einer Richtung erstreckt, in der sich der Ausgießstutzen mit seiner Mittelachse erstreckt.

Ein derartiges Gefäß ist bekannt geworden aus der französischen Patentschrift FR-A-2 497 117. Der Nachteil bei diesem Gefäß besteht darin, daß die Ausgießöffnung von dem Steg begrenzt ist. Unmittelbar hinter dem Steg in Richtung der aus dem Gefäß ausfließenden Flüssigkeit erweitert sich der Querschnitt des Ausgießstutzens sehr plötzlich, so daß an dem Steg starke Verwirbelungen der aus der Ausgießöffnung austretenden Flüssigkeit entstehen. Diese Verwirbelungen sorgen dafür, daß nicht nur am Boden des Gefäßes liegende feste Bestandteile aufgewirbelt und aus der Ausgießöffnung ausgetragen werden, wenn das gefüllte Gefäß zum Zwecke der Trennung der Flüssigkeit geneigt wird, sondern darüber hinaus führen die Verwirbelungen auch dazu, daß der Trenneffekt in Frage gestellt wird. Aufgrund der Verwirbelungen werden Strudel innerhalb der Flüssigkeit erzeugt, durch die die von den schweren Flüssigkeitsbestandteilen zu trennenden leichten Flüssigkeitsbestandteile in Richtung auf die Ausgießöffnung gesaugt werden, wenn das Gefäß entleert wird.

Aus der DE-C-5461 619 ist ein Rahmabschöpfer bekannt, der in seiner Einströmöffnung ein Sieb zur Verhinderung von Verunreinigungen der einströmenden Flüssigkeit aufweist. Dieses Sieb kann aufgrund seiner zweckbedingten Anordnung und Ausgestaltung nicht zu einem Beruhigungseffekt der gesamten Strömung innerhalb des Rahmeschöpfers beitragen, so daß auch hier der Trenneffekt durch Verwirbelungen in Frage gestellt werden kann.

Aufgabe der vorliegenden Erfindung ist es daher, das Gefäß der einleitend genannten Art so zu verbessern, daß die Trennung der Flüssigkeitsbestandteile mit einer hohen Trenngüte durchgeführt werden kann.

Diese Aufgabe wird nunmehr erfindungsgemäß dadurch gelöst, daß in der Ausgießöffnung ein Filter angebracht ist, das als ein Bestandteil der Wandung ausgebildet ist und aus mindestens zwei sich einander kreuzende Stäben besteht, und der Steg eine dem Boden zugewandte untere Begrenzung aufweist, die an ihren sich einander gegenüberliegenden Enden über Abrundungen in seitliche Begrenzungen der Ausgießöffnungen einmündet.

Diese Ausbildung der Ausgießöffnung führt dazu, daß die Flüssigkeit aus dem Gefäß beruhigt austreten kann, so daß sich Wirbel im Bereich der Ausgießöffnung nicht bilden können. Die Ausbildung derartiger Wirbel wird durch die sich kreuzenden Gitterstäbe einerseits und die Abrundungen im Bereich der seitlichen Begrenzung der Ausgießöffnung vermieden. Dabei ist von besonderer Bedeutung, daß die sich kreuzenden Stäbe als Bestandteil der Wandung ausgebildet sind. Auf diese Weise wird erreicht, daß das Filter sich genau in der Ebene der Ausgießöffnung erstreckt, so daß die durch die Ausgießöffnung hindurchtretenden Flüssigkeitsteilchen etwa gleichzeitig durch die zwischen den Gitterstäben liegenden Öffnungen hindurch treten müssen. Dadurch wird die Strömung im Bereich der Ausgießöffnung kanalisiert und beruhigt. Ein weiterer Beruhigungspunkt tritt dadurch ein, daß die Ausgießöffnung an den sich einander gegenüberliegenden Enden des Steges abgerundet ist, so daß auch dort einander weitgehend parallele Strömungsfäden entstehen können.

Diese treten in die sich unmittelbar hinter der Ausgießöffnung erweiternde Querschnitte des Ausgießstutzens ein und werden dort jedenfalls solange in einem beruhigten Fluß weitergeführt, bis die Vereinigung der Strömungsfäden an einer Stelle des Ausgießstutzens erfolgt, von der aus Rückwirkungen auf den Fließzustand im Bereich der Ausgießöffnung nicht mehr zu befürchten sind.

Darüber hinaus besitzt das Filter den Vorteil, daß auf dem Boden des Gefäßes liegende feste Bestandteile davon abgehalten werden, sich ausgerechnet im engsten Ausflußquerschnitt der Ausgießöffnung festzusetzen und damit an dieser Stelle das Ausfließverhalten der ausfließenden Flüssigkeit im Sinne der Erzeugung von Wirbelströmungen zu beeinflussen. Vielmehr setzen sich möglicherweise die Gitterstäbe mit festen Bestandteilen, die sich auf dem Boden des Gefäßes sammeln, gleichmäßig zu, so daß trotzdem zwischen den Gitterstäben noch etwa gleichgroße Öffnungen verbleiben, die ein beruhigtes Austreten der Restflüssigkeit ermöglichen.

Weitere Einzelheiten der Erfindungergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

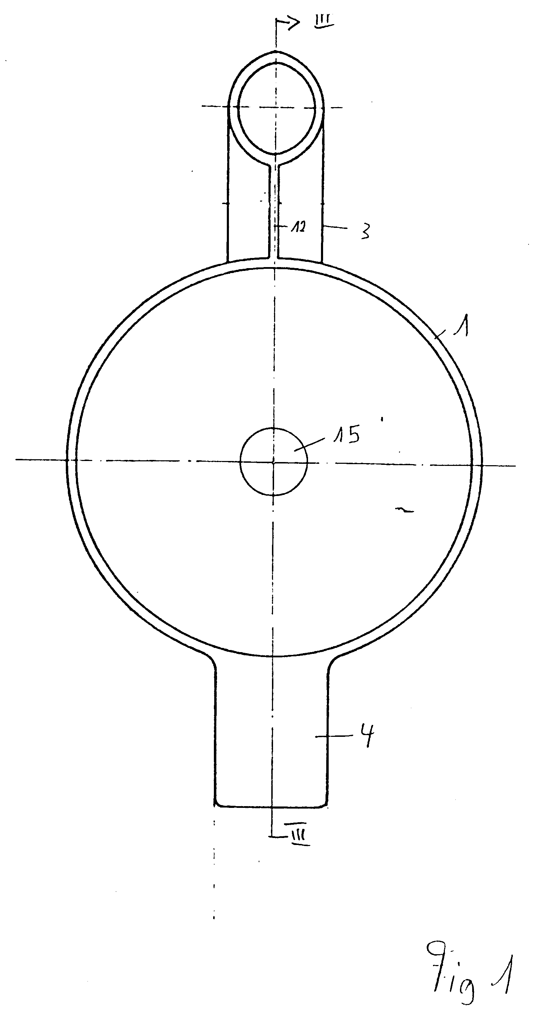

Fig. 1 : eine Draufsicht auf das Gefäß,

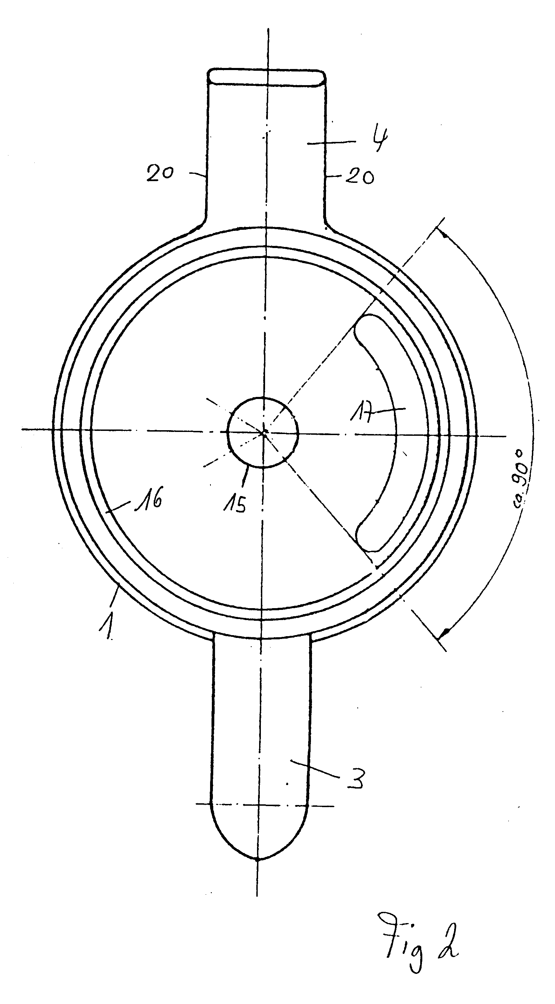

Fig. 2 : eine Darstellung des Gefäßes von unten,

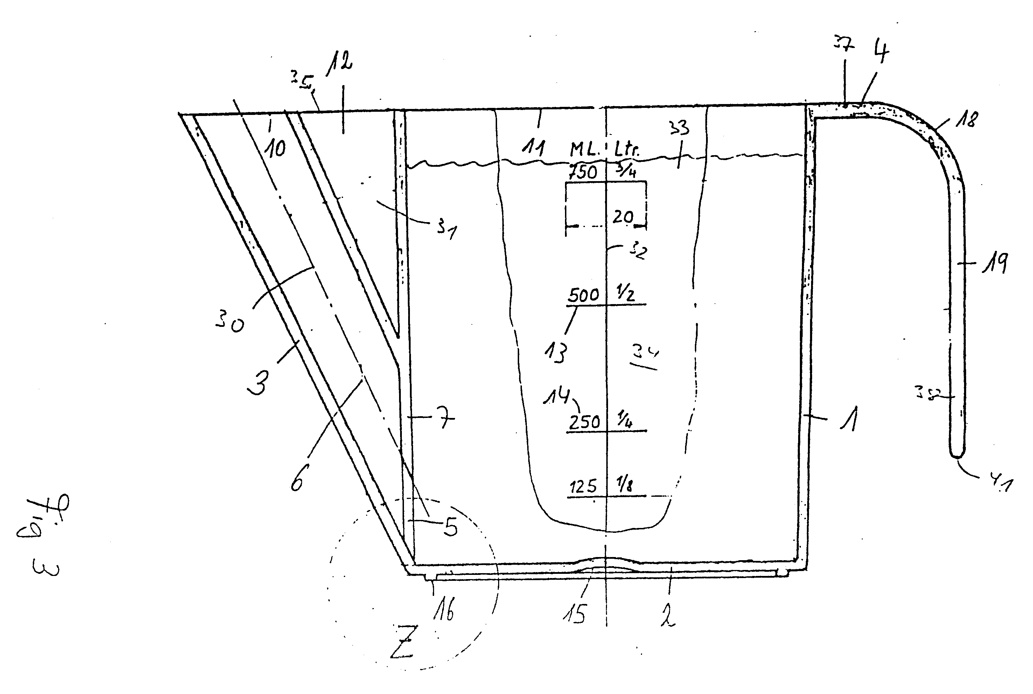

Fig. 3 : eine zur Hälfte geschnittene Seitenansicht entsprechend der Schnittlinie III-III in Figur 1,

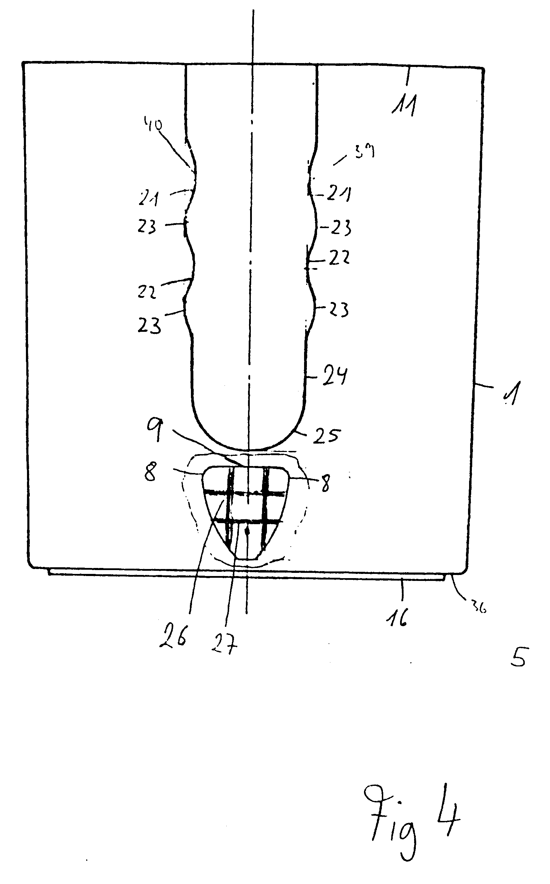

Fig. 4 : eine Seitenansicht des Gefäßes in Richtung auf den Griff mit einer aufgeschnittenen Wandung im Bereich der Ausgießöffnung,

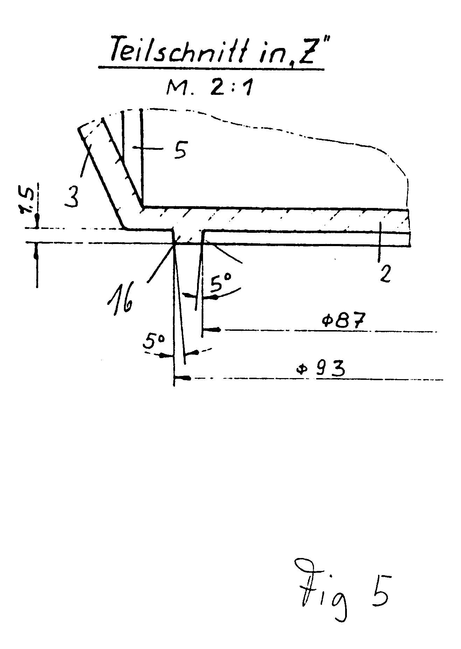

Fig. 5 : einen Teilschnitt entsprechend der in Figur 3 gekennzeichneten Schnittebene Z.

Ein Gefäß besteht im wesentlichen aus einer annäherd Zylindrischen Wandung 1, einem Boden 2, einem Ausgießstutzen 3 sowie einem Griff 4. Der Boden 2 verschließt die zylindrische Wandung 1 an ihrem in lotrechter Richtung unten liegenden Ende. Im Bereich des Bodens 2 mündet der Ausgießstutzen 3 im Bereich eines Querschnittes, dessen Größe der Durchdringung entspricht, mit der der Ausgießstutzen 3 in die zylindrische Wandung eintritt. Dieser Querschnitt 6 ergibt sich aus der Form der Wandung 1 einerseits und des Ausgießstutzens 3 andererseits sowie der Größe eines Gießwinkels 31, der sich zwischen einer Richtung aufspannt, die der Ausgießstutzen 3 mit seiner Mittelachse 3o sowie die Wandung 1 mit ihrer Mittelachse 32 vorgibt. Der Griff 4 ist auf einer Seite der Wandung 1 befestigt, die derjenigen Seite der Wandung 1 gegenüberliegt, in die der Ausgießstutzen 3 mündet.

Im Querschnitt 6 liegt eine Ausgießöffnung 5, aus der eine Flüssigkeit 33 aus einem von der Wandung 1 umschlossenen Raum 34 in den Ausgießstutzen 3 eintritt. Diese Ausgießöffnung 5 erstreckt sich jedoch nur über einen dem Boden 2 zugewandten unteren Teil des Querschnittes 6. Der diesem unteren Teil gegenüberliegende obere Teil des Querschnittes 6 wird durch einen Steg 7 verschlossen, der als Teil der Wandung 1 ausgebildet ist. An den Steg 7 schließen sich seitliche Begrenzungen der Ausgießöffnung 5 an, die die Ausgießöffnung 5 in Richtung auf den Boden 2 begrenzen. Diese seitlichen Begrenzungen münden stetig über Rundungen 8 in den Steg 7 ein, der eine obere Begrenzung 9 der Ausgießöffnung 5 darstellt. Diese obere Begrenzung 9 verläuft in einer Ebene, die im wesentlichen planparallel zu einer vom Boden 2 aufgespannten Ebene verläuft. Die Ausgießöffnung 5 reicht bis unmittelbar an den Boden 2 heran, so daß auch schon bei einer leichten Neigung der Mittelachse 32 das Gefäß leicht vollständig entleert werden kann.

Um den Raum 34 möglichst vollständig mit Flüssigkeit 33 füllen zu können, ohne daß diese aus dem Ausgießstutzen 3 austreten kann, weist der Ausgießstutzen 3 an seiner dem Boden 2 gegenüberliegenden Ende eine obere Begrenzung 1o auf, die in einer Ebene mit einer oberen Begrenzung 11 liegt, die die Wandung 1 auf ihrer dem Boden 2 abgewandten Seite begrenzt. Zur Erhöhung der Stabilität ist zwischen dem Ausgießstutzen 3 und der Wandung 1 ein Steg 12 vorgesehen, der einerseits an dem Ausgießstutzen 3 und andererseits an der Wandung 1 befestigt ist. Dieser Steg 12 weist eine obere Begrenzung 35 auf, die in einer Ebene mit den Begrenzungen 1o, 11 verläuft.

Sowohl die Wandung 1 als auch der Boden 2 können aus einem durchsichtigen Material hergestellt sein, das eine Beobachtung der Flüssigkeit 33 zuläßt. Auf diese Weise kann entschieden werden, ab wann sich in der Flüssigkeit 33 Schichten ausgebildet haben, die eine Separierung der jeweils unteren Schicht von einer darüber liegenden oberen Schicht ermöglichen. Auf der Wandung 1 kann eine Skalierung 13 mit entsprechenden Volumenwerten 14 vorgesehen sein, um einen relativ genauen Überblick darüber zu erhalten, welche Menge der Flüssigkeit 33 sich innerhalb des Gefäßes befindet und welche Teilmengen davon entsprechend der sich ausbildenden Schichtung abbgefüllt worden sind.

Der Boden 2 weist in seiner Mitte eine Wölbung 15 auf, die sich in Richtung auf den Raum 34 erstreckt. Diese Wölbung erhöht die Festigkeit des Gefäßes durch Versteifung des Bodens 2. Zur Verbesserung der Standfestigkeit des Gefäßes ist an einer an der Wandung 1 abgelegenen Unterseite 36 des Bodens 2 ein kreisförmiger Steg 16 angebracht, der etwa konzentrisch verläuft. Für Kennzeichnungszwecke ist außerdem auf der Unterseite 36 ein Schrifteinsatz 17 vorgesehen, auf den Typenbezeichnungen oder andere Hinweise vermerkt werden können.

Der Griff 4 ist im Bereich der oberen Begrenzung 1o befestigt. Er besteht im wesentlichen aus zwei Teilstücken 19, 37, von denen ein erstes im wesentlichen senkrecht auf einer tangential an die Wandung 1 angelegten gedachten Ebene eine vom Ausgießstutzen 3 wegweisende Richtung herausragt. An dieses Teilstück 37 schließt sich über eine Rundung 18 das zweite Teilstück 19 an, das eine Ebene aufspannt, die im wesentlichen planparallel zu der tangentialen Ebene verläuft, aus der das erste Teilstück 37 senkrecht hervorsteht. Der gesamte Griff 4 kann als ein relativ schmales und in seiner Wandstärke dünnes Bandmaterial ausgebildet sein, dessen einander etwa planparallel verlaufenden Oberflächen in etwa planparallel zu der an die Wandung angelegten Tangentialebene verlaufen. Dieses Bandmaterial weist Schmalkanten 2o auf, in die insgesamt vier gerundete Aussparungen 21, 22 eingearbeitet sind. Jeweils zwei dieser Aussparungen 21, 22 sind in je einer der beiden Schmalkanten 2o vorgesehen und weisen mit ihren Fußpunkten 39, 4o jeweils aufeinander zu. Diese Fußpunkte 39, 4o liegen an einer Stelle, an der die Aussparungen 21, 22 am weitesten in das den Griff 4 ausbildende Bandmaterial hineinragen. Die Aussparungen 21, 22 haben einen etwa halbkreisförmigen Querschnitt, dessen Größe in etwa derjenigen von Fingern einer durchschnittlich ausgebildeten menschlichen Hand entsprechen. Diese Finger finden im Bereich der Aussparungen 21, 22 einen sicheren Halt am Griff 4, so daß dieser auch dann nicht der menschlichen Hand entgleiten kann, wenn durch einen fettförmigen oder sonstigen Gleitbelag eine Herabsetzung der Haftung stattgefunden hat, die von der menschlichen Hand bei üblicher Anpreßkraft auf den Griff 4 ausgeübt wird.

Von den vier Aussparungen 21, 22 liegen sich jeweils zwei einander paarweise gegenüber. Die beiden Paare werden durch Wölbungen 23 miteinander verbunden, die sich zwischen den Aussparungen 21, 22 erstrecken und von den Fußpunkten 39, 4o nach außen weg gerichtet sind. Dabei sind obere Aussparungen 21, die in Richtung auf das Teilstück 37 oberhalb der Wölbungen 23 liegen, entsprechend der Geometrie einer menschlichen Hand etwas größer als die unteren Aussparungen 22 ausgebildet. Im Anschluß an die unteren Aussparungen 22 schließen sich in eine von den oberen Aussparungen 21 abgewandte Richtung zwei weitere Wölbungen 23 an, die formschlüssig jeweils zwei einander benachbarte Finger einer menschlichen Hand beaufschlagen. Unterhalb dieser Wölbung 23 erstreckt sich der Griff 4 zu seinem vom oberen Teilstück 37 abgewandten Ende 41, das als eine Rundung 25 ausgebildet ist. Zwischen dieser Rundung 25 und der ihr benachbarten Wölbung 23 erstreckt sich das Teilstück 19 in einem schmalen Unterteil 24, dessen Breite in etwa dem Abstand zwischen den Fußpunkten 39, 4o zweier einander gegenüberliegender Aussparungen 21, 22 entspricht.

In der Ausgießöffnung 5 kann zur Zurückhaltung von festen Verschmutzungen der Flüssigkeit 33 ein Filtereinsatz 26 vorgesehen sein. Dieser ist aus Stäben 27 aufgebaut, die in die Wandung 1 einmünden und aus einem gleichen Material wie diese bestehen. Die Stäbe 37 kreuzen einander in Form eines Gitters. Zweckmäßigerweise sind jeweils zwei Stäbe vorhanden, die sich in horizontaler Richtung einerseits und in lotrechter Richtung andererseits erstrecken und dabei Flächenstücke einschließen, die einander annähernd gleichgroß sind. Es ist jedoch auch denkbar, daß jeweils nur ein horizontaler und ein vertikaler Stab 27 vorgesehen sind.

Die Wandung 1 und der Stutzen 3 weisen Gestaltungen auf, die ein wenig konisch sich in Richtung auf ihre oberen Begrenzungen 1o, 11 erweitern. Eine derartige Gestaltung erweist sich als fertigungstechnisch vorteilhaft und erhöht darüber hinaus auch die Festigkeit des Gefäßes.

Das in den Figuren dargestellte Gefäß ist für einen nutzbaren Volumeninhalt von 75o ml ausgelegt. Dieses Volumen ist in der Haushaltstechnik sehr verbreitet und damit auch zweckmäßig. Das Gefäß kann aber auch für andere Volumeninhalte hergestellt werden, die jeweils einem vorgesehenen Anwendungsfall angepaßt sind.

Das Gefäß kann zum Zwecke der Trennung von heißen Flüssigkeiten aus Materialien hergestellt werden, die hohen Temperaturen widerstehen. Es ist aber auch möglich, andere, bevorzugt transparente Materialien, zu verwenden, die für den jeweiligen Einsatz des Gefäßes geeignet sind.

Nachdem zu trennende Flüssigkeiten in den Raum 34 eingefüllt wurden, wird abgewartet, bis eine Entmischung von Flüssigkeitsteilen verschiedenen spezifischen Gewichts stattfindet. Sobald eine Entmischung stattgefunden hat und ein leichterer Flüssigkeitsanteil sich auf einem schwereren Flüssigkeitsanteil absondert, kann der sich im Bereich des Bodens 2 ansammelnde leichtere Flüssigkeitsanteil durch leichte Neigung des Gefäßes aus dem Ausgießstutzen 3 abgefüllt werden. Dabei kann durch optische Überwachung des Ausgießvorganges darauf geachtet werden, daß dieser beendet wird, sobald der auf dem leichteren Flüssigkeitsanteil schwimmende schwerere Flüssigkeitsanteil in die Ausgießöffnung 5 eintritt. Um eine möglichst vollkommene Abfüllung des schweren Flüssigkeitsanteils herbeiführen zu können, hält der Steg 7 auch bei relativ großer Neigung des Gefäßes den leichteren Flüssigkeitsanteil relativ lange zurück, so daß der schwerere Flüssigkeitsanteil durch einen relativ großen Querschnitt der Ausgießöffnung 5 in den Ausgießstutzen 3 eintreten kann, ohne daß dem leichteren Flüssigkeitsanteil die Möglichkeit eingeräumt wird, ebenfalls in den Ausgießstutzen eintreten zu können.

Der Filtereinsatz 26 hält dabei feste Bestandteile innerhalb des Raumes 34 zurück. Da diese festen Anteile sich bevorzugt auf dem Boden 2 des Gefäßes sammeln, muß damit gerechnet werden, daß diese schon bei leichter Neigung des Gefäßes als erste in den Ausgießstutzen 3 eintreten und diesen entweder verstopfen oder unmittelbar in das mit der schwereren Flüssigkeit zu füllende Gefäß gelangen. Da sehr häufig aber nur eine von festen Bestandteilen unabhängige Flüssigkeit in dem zu befüllenden Gefäß gewünscht wird, halten die Stäbe 27 die festen Bestandteile im Raum 34 zurück. Da diese sich ungeordnet vor dem Filtereinsatz 26 ansammeln , wird die Ausgießöffnung 5 nicht vollkommen dicht-gesetzt. Vielmehr verbessern die sich vor dem Filtereinsatz 26 ansammelnden Dickstoffe eine Feinfilterwirkung des Filtereinsatzes 26.

Die Abfüllung des Anteils der schwereren Flüssigkeit wird beendet, wenn an der oberen Begrenzung 1o des Ausgießstutzens 3 erste Anteile der leichteren Flüssigkeit erkennbar werden. Es ist jedoch auch denkbar, den Abfüllvorgang aufgrund einer optischen Überwachung der jeweils abgefüllten Flüssigkeitsanteile zu überwachen.

**Patentansprüche**

1. Gefäß zur Trennung von Flüssigkeiten, die sich weder mischen noch ineinander lösen lassen und unterschiedliche spezifische Gewichte aufweisen, mit einer vom Boden (2) begrenzten Wandung (1), die von einem Ausgießstutzen (3) im Bereich eines Querschnitts (6) durchdrungen ist, in dem eine Ausgießöffnung (5) angeordnet ist, die kleiner als der Querschnitt (6) ist, der in seinem vom Boden (2) abgewandten oberem Bereich durch einen Steg (7) verschlossen ist, der sich quer zu einer Richtung erstreckt, in der sich der Ausgießstutzen (3) mit seiner Mittelachse (30) erstreckt, dadurch gekennzeichnet, daß in der Ausgießöffnung (5) ein Filter (26) angebracht ist, das als ein Bestandteil der Wandung (1) ausgebildet ist und aus mindestens zwei sich kreuzenden Stäben (27) besteht, und der Steg (7) eine dem Boden (2) zugewandte untere Begrenzung aufweist die an ihren sich gegenüberliegenden Enden Über Abrundungen (8) in seitliche Begrenzungen der Ausgießöffnungen (5) einmündet.

**Claims**

1. Vessel for the separation of fluids, which cannot be mixed nor dissolved in each other, and have different specific gravities, with a separating wall (1) from the base (2), which is penetrated by a pouring socket (3), in way of a cross-section (6), in which a pouring opening (5) is located, that is smaller than the cross-section (6), which is closed by a web (7) in the upper section facing away from its base (2), that extends across one direction, in which the outlet socket (3) extends with its center line (30), characterized by a filter (26) being fitted in the outlet opening (5), which is shaped as a component of the wall (1) and consists of at least two crossing rods (27), and the web (7) having a lower limitation facing the base (2), which through chamfering (8) at their opposite ends join in the side limitations of the outlet openings (5).

**Revendications**

1. Récipient pour la séparation de liquides ne pouvant être mélangés ou dissous l'un dons l'autre présentant des poids spécifiques différents, avec une paroi (1) limitée par le fond (2) qui est pénétrée par un bec de déversement (3) au niveau d'une section (6) qui comprend une ouverture de déversement (5) plus petite que la section (6) fermée à sa partie supérieure faisant face au fond (2) par une traverse (7) s'étendant en travers du plan du bec de déversement (3) avec son axe central (30) caractérisé par le fait qu'un filtre (26) est disposé dans l'ouverture de déversement (5) formant partie de la paroi (1) et constitué de deux barres (27) au moins qui se croisent et que la traverse (7) présente à sa partie inférieure une limitation tournée vers le fond (2) aboutissant par ses extrémités se faisant faces dans des limitations latérales des ouvertures de déversement (5) par l'intermédiaire de parties arrondies (8).

III

12    3

1

15

4

III

Fig 1

Fig 2

Fig 3

ML. Ltr.
750 3/4
20
500 1/2
250 1/4
125 1/8

EP 0 181 605 B1

Fig 4

*Teilschnitt in „Z"*

M. 2:1

Fig 5